## Europäisches Patentamt
## European Patent Office
## Office européen des brevets

(19)

(11) Numéro de publication: **0 055 148**
**B1**

(12) ## FASCICULE DE BREVET EUROPEEN

(45) Date de publication du fascicule du brevet:
**12.09.84**

(51) Int. Cl.³: **G 06 G 7/14,** H 04 N 3/16

(21) Numéro de dépôt: **81401756.2**

(22) Date de dépôt: **30.10.81**

(54) Additionneur de tensions et dispositif de balayage vertical, et récepteur de télévision comportant un tel additionneur.

(30) Priorité: **23.12.80 FR 8027322**

(43) Date de publication de la demande:
**30.06.82 Bulletin 82/26**

(45) Mention de la délivrance du brevet:
**12.09.84 Bulletin 84/37**

(84) Etats contractants désignés:
**DE GB**

(56) Documents cités:
**DE - A - 2 116 431**
**FR - A - 2 438 395**

**FUNKSCHAU, vol. 48, no. 12/13, 1976, München, DE, H. SCHREIBER: "Streiflichter vom Salon des Composants Electroniques", pages 98-100**
**FUNKSCHAU, vol. 51, no. 17, août 1979, München, DE, R. HUGO: "Vertikalablenkschaltung mit Komparatoren", pages 95-98**

(73) Titulaire: **SOCIETE D'ELECTRONIQUE DE LA REGION PAYS DE LOIRE SEREL, 74, rue du Surmelin, F-75020 Paris (FR)**

(72) Inventeur: **Guillon, Jean-Claude, THOMSON-CSF SCPI 173, bld Haussmann, F-75360 Paris Cedex 08 (FR)**
Inventeur: **Potin, Michel, THOMSON-CSF SCPI 173, bld Haussmann, F-75360 Paris Cedex 08 (FR)**

(74) Mandataire: **Grynwald, Albert et al, THOMSON-CSF SCPI 173, Bld Haussmann, F-75379 Paris Cedex 08 (FR)**

## Description

L'invention est relative à un additionneur de tensions et à un dispositif de balayage vertical ainsi qu'à un récepteur de télévision comportant un tel additionneur.

Un additionneur de tensions comprend habituellement un point de sommation auquel sont connectées des bornes de résistances dont les bornes opposées reçoivent les signaux de tension qui doivent être additionnés avec un coefficient dépendant des valeurs des résistances. C'est le signal de tension au point de sommation qui constitue le résultat de l'addition.

De tels additionneurs comportent, habituellement, soit des résistances en éléments discrets ou résistances discrètes, soit des résistances faisant partie d'un circuit intégré ou résistances intégrées. Il n'y a pas de difficulté particulière à réaliser un tel additionneur lorsque toutes les résistances sont discrètes ou lorsque toutes les résistances font partie d'un même circuit intégré, la précision des coefficients étant suffisante pour la plupart des applications, ceux-ci ayant, en outre, des valeurs peu dispersées lors de la fabrication en grande série d'un additionneur.

Mais on a constaté qu'un additionneur présentant à la fois des résistances discrètes et des résistances intégrées était en général moins satisfaisant, les valeurs des coefficients étant très dispersées.

L'invention remédie à cet inconvénient.

L'additionneur selon l'invention comporte un point de sommation auquel sont connectées les premières bornes d'au moins deux résistances intégrées sur un substrat commun et il est caractérisé en ce que la seconde borne d'au moins l'une des résistances intégrées est reliée à la première borne d'au moins une résistance de type discret, les autres bornes restantes des résistances de type intégré et de type discret recevant les tensions à additionner, la valeur de la (des) résistance(s) de type intégré à laquelle (auxquelles) est (sont) connectée(s) une (des) résistance(s) de type discret étant grande(s) devant la valeur de la (des) résistance(s) de type discret qui lui (leur) est (sont) associée(s).

Ainsi la configuration et les valeurs des résistances sont telles que chacun des coefficients ne dépend que du rapport entre les valeurs de résistance intrégrées et/ou du rapport entre les valeurs de résistances discrètes.

L'invention résulte de la constatation suivante: les valeurs des résistances à l'intérieur d'un circuit intégré sont en général très dispersées d'un circuit à un autre lors d'une fabrication en série. Par contre le rapport entre les valeurs des résistances d'un même circuit intégré est relativement peu dispersé. Par ailleurs, la dispersion des valeurs des résistances discrètes est habituellement relativement faible. Ainsi en ne faisant pas intervenir de rapport entre valeurs de deux résistances de natures différentes, on peut fabriquer en série un additionneur dans lequel les valeurs des coefficients dont sont affectées les tensions additionnées sont peu dispersées.

Cet additionneur algébrique est particulièrement utile pour constituer un circuit de balayage, notamment vertical, pour un récepteur de télévision ou analogue, afin d'additionner un signal en dents de scie, produit par un générateur interne à un circuit intégré, et un signal de correction engendré par un générateur distinct du circuit intégré. Dans un tel circuit de balayage le taux de correction du signal en dents de scie est déterminé avec précision. En outre, l'additionneur permet non seulement d'additionner le signal en dents de scie et le signal de correction mais aussi d'ajouter des signaux de contre-réaction, en particulier un signal représentant le courant traversant la bobine de déviation et un signal représentant le potentiel de l'une des bornes de cette bobine.

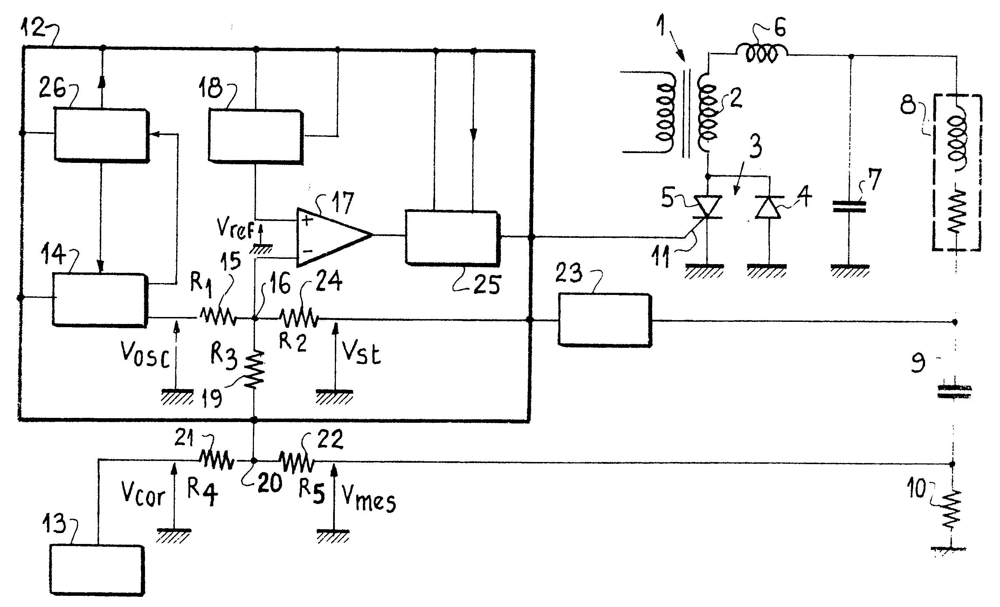

D'autres dispositions de l'invention apparaîtront avec la description de l'un de ses modes de réalisation, celle-ci étant effectuée en se référant à la figure unique ci-annexée qui représente un circuit de balayage vertical pour récepteur de télévision comprenant un additionneur selon l'invention.

Le circuit de balayage vertical est du type de celui décrit dans le brevet européen N° 8263 au nom de la titulaire, c'est-à-dire qu'il tire l'énergie nécessaire pour produire le courant de balayage exclusivement des impulsions résultant de la surtension apparaissant aux bornes de la bobine de déviation horizontale (non montrée) lors de la variation brusque de l'intensité du courant traversant cette dernière bobine. A cet effet, un transformateur 1 appelé transformateur ligne comporte un enroulement secondaire 2 dont une borne est reliée à la masse par l'intermédiaire d'un interrupteur électronique 3 constitué par une diode 4 dont l'anode est à la masse et un thyristor 5 en parallèle mais en sens inverse, c'est-à-dire avec sa cathode à la masse. L'autre borne du secondaire 2 est reliée à une inductance 6 elle-même reliée à la masse par l'intermédiaire d'un condensateur de filtrage 7. L'énergie disponible aux bornes du condensateur 7 est recueillie par l'ensemble en série de la bobine de déviation verticale 8, d'un condensateur de liaison 9 et d'une résistance de mesure 10. Cet ensemble en série est tel que la bobine 8 est connectée directement au point de jonction entre l'inductance 6 et le condensateur 7; l'autre borne de la bobine 8 est reliée au condensateur de liaison 9, tandis que la borne de la résistance 10 opposée à celle qui est reliée à une armature du condensateur 9 est à la masse.

Les signaux appliqués sur la gâchette 11 du thyristor 5 sont tels qu'à chaque ligne ce thyristor est conducteur pendant un temps qui est fonction du numéro de la ligne, la variation désirée de l'intensité du courant traversant le déviateur 8 étant ainsi obtenue en agissant sur le temps de conduction du thyristor 5.

La commande du thyristor 5 est effectuée par un circuit intégré 12 et un générateur 13 de signaux de correction, notamment de linéarité, ne faisant pas partie du circuit 12. Bien entendu, sur la figure les dimensions relatives des divers éléments ne correspondent pas à leurs dimensions réelles. En particulier, le circuit 12 est formé sur une pastille de silicium de petites dimensions.

Le circuit intégré 12 comporte un oscillateur 14 engendrant des signaux Vosc en dents de scie à la fréquence de balayage vertical, ou fréquence trame, et dont la sortie est reliée, par l'intermédiaire d'une résistance 15 de valeur $R_1$, à un point 16 de sommation relié à l'entrée inverseuse (−) d'un amplificateur opérationnel 17 dont l'entrée non inverseuse (+) reçoit un signal de tension déterminé Vref produit par un générateur 18 faisant également partie du circuit intégré 12. Au point 16 est également connectée une résistance intégrée 19 de la valeur $R_3$ reliée à une borne 20 extérieure au circuit 12, elle-même connectée à la sortie du générateur 13 de signaux de correction par l'intermédiaire d'une résistance 21 de valeur $R_4$ qui est sous forme discrète.

Un signal Vmes représentant l'intensité du courant circulant dans le déviateur 8 est également transmis au point 16. A cet effet, la tension aux bornes de la résistance 10, tension qui représente cette intensité, est transmise audit point 16 par l'intermédiaire, d'une part, d'une résistance discrète 22 de valeur $R_5$ et qui est reliée au point 20 et, d'autre part, de la résistance intégrée 19.

La valeur moyenne de la tension aux bornes du condensateur 9 est également transmise au point 16 grâce à un filtre passe-bas 23 extérieur au circuit 12 et à une résistance intégrée 24 de valeur $R_2$.

La sortie de l'amplificateur différentiel 17 est reliée à la gâchette 11 du thyristor 5 par l'intermédiaire d'un convertisseur tension-temps 25 faisant également partie du circuit 12.

Le circuit intégré comporte enfin un circuit de déclenchement 26 permettant de synchroniser les signaux produits par l'oscillateur 14 aux impulsions à la fréquence trame provenant du signal reçu, par exemple d'une antenne.

La capacité du condensateur 9 est de valeur suffisamment élevée pour que la tension aux bornes de l'ensemble constitué par le déviateur 8, ce condensateur 9 et la résistance 10 garde un signe constant.

La valeur $R_4$ de la résistance 21 et/ou la valeur $R_5$ de la résistance 22 est faible par rapport à la valeur $R_3$ de la résistance intégrée 19. Par exemple:

$$R_5 = \frac{R_3}{10}$$

Grâce à la liaison entre une borne de la résistance 10 et l'entrée inverseuse de l'amplificateur 17, on effectue une contre-réaction appelée contre-réaction dynamique permettant d'asservir le courant traversant le déviateur 8 au signal produit par l'oscillateur 14 auquel est superposé le signal de correction produit par le générateur 13.

La liaison à filtre passe-bas 23 et résistance 24 permet d'effectuer une contre-réaction, dite contre-réaction statique, qui assure une valeur constante, grâce à la constance de la tension Vref, à la valeur moyenne de la tension aux bornes du condensateur de liaison 9.

On va maintenant montrer que chaque tension parvenant au point 16 est affectée d'un coefficient qui ne dépend que du rapport entre des valeurs de résistances de même nature (intégrée ou discrète).

La tension V au point de sommation 16 a la valeur suivante:

$$V = a_1 Vosc + a_2 Vst + a_4 Vmes + a_5 Vcor$$

Dans cette formule Vosc est le signal de tension à la sortie de l'oscillateur 14, Vst est le signal de tension à la sortie du filtre 23, Vmes est le signal de tension à la borne de la résistance 22 opposée au point 20, et Vcor est le signal à la sortie du générateur 13.

Les coefficients $a_1$, $a_2$, $a_4$ et $a_5$ ont les valeurs suivantes:

$$a_1 = \frac{Req}{R_1}$$

$$a_2 = \frac{Req}{R_2}$$

$$a_4 = \frac{Req}{R_3 + R_4//R_5} \cdot \frac{R_4}{R_4 + R_5}$$

$$a_5 = \frac{Req}{R_3 + R_4//R_5} \cdot \frac{R_5}{R_4 + R_5}$$

$R_4//R_5$ est la valeur de la résistance équivalente aux résistances 21 et 22 en parallèle, c'est-à-dire:

$$\frac{1}{R_4//R_5} = \frac{1}{R_4} + \frac{1}{R_5}$$

et Req est défini comme suit:

$$\frac{1}{Req} = \frac{1}{R_1} + \frac{1}{R_2} + \frac{1}{R_3 + R_4//R_5}$$

$R_5$ étant petit devant $R_3$ et la résistance équivalente aux résistances de valeurs respectives $R_4$ et $R_5$ en parallèle ayant une valeur plus faible que $R_5$, la valeur de cette résistance équivalente est, à fortiori, petite par rapport à $R_3$. Dans ces conditions la quantité

$$\frac{1}{R_3 + R_4//R_5}$$

est peu différente de

$$\frac{1}{R_3}$$

Pour obtenir ce résultat, il suffit, de façon plus générale, que $R_4$ et/ou $R_5$ soi(en)t petit(s) devant $R_3$.

De ce résultat, on déduit:
le coefficient $a_1$ est peu différent de

$$\frac{1}{1 + \frac{R_1}{R_2} + \frac{R_1}{R_3}}$$

$a_2$ est peu différent de

$$\frac{1}{1 + \frac{R_2}{R_1} + \frac{R_2}{R_3}}$$

$a_4$ est peu différent de

$$\frac{R_4}{R_4 + R_5} \cdot \frac{1}{1 + \frac{R_3}{R_2} + \frac{R_3}{R_1}}$$

enfin, le coefficient $a_5$ est peu différent de

$$\frac{R_5}{R_4 + R_5} \cdot \frac{1}{1 + \frac{R_3}{R_2} + \frac{R_3}{R_1}}$$

On voit ainsi que les coefficients $a_1$ et $a_2$ ne dépendent que de rapports entre valeurs de résistances intégrées. Ces coefficients peuvent donc être déterminés avec précision.

Les coefficients $a_4$ et $a_5$ sont chacuns le produit de deux termes dont le premier ne dépend que du rapport entre les valeurs de résistances discrètes et dont le second ne dépend que du rapport entre des valeurs de résistances intégrées. Il en résulte que ces coefficients $a_4$ et $a_5$ peuvent également être déterminés avec précision.

Ainsi le taux de correction dont sera affecté le signal en dents de scie produit par l'oscillateur 14 pourra être modifié par modification de $R_5$ ou $R_4$, c'est-à-dire en agissant sur les valeurs d'éléments discrets. On a constaté que ce taux de correction pouvait alors être modifié dans une gamme supérieure à celle nécessaire pour la correction des tubes cathodiques et cela sans altération des performances des circuits de contre-réaction, respectivement statique et dynamique. En outre, le nombre des composants externes au circuit intégré 12 est réduit à un minimum.

Si le récepteur de télévision est tel qu'il peut fonctionner sans correction, le générateur 13 et la résistance 21 pourront être supprimés et la résistance 22 pourra être remplacée par un simple fil de liaison.

En variante encore le générateur 13 fait partie du circuit intégré 12, les résistances 21 et 22 étant cependant sous forme discrète pour permettre de modifier leurs valeurs afin de modifier le taux de correction par exemple pour l'adapter au type de tube utilisé.

## Revendications

1. Additionneur de tensions comportant un point de sommation (16) auquel sont connectées des premières bornes d'au moins deux résistances (15, 19, 24) de type intégré, lesdites résistances étant intégrées sur un substrat commun, caractérisé en ce que:
— la seconde borne d'au moins une desdites résistances intégrées (19) est reliée à la première borne d'au moins une résistance (21, 22) de type discret, les secondes bornes restantes des résistances de type intégré et de type discret recevant les tensions à additionner,
— la valeur de la (des) résistance(s) de type intégré (19) à laquelle (auxquelles) est (sont) connectée(s) une (des) résistance(s) (21, 22) de type discret est grande devant la valeur de la (des) résistance(s) de type discret qui lui (leur) est (sont) associée(s).

2. Additionneur selon la revendication 1, caractérisé en ce que deux tensions (Vcor et Vmes) sont appliquées aux extrémités respectives de deux résistances discrètes (21, 22) présentant un point commun (20) relié au point de sommation (16) par l'intermédiaire d'une résistance intégrée (19) de grande valeur ($R_3$) par rapport à la valeur ($R_4$ ou $R_5$) de l'une au moins des résistances discrètes (21, 22).

3. Additionneur selon l'une des revendications 1 ou 2, caractérisé en ce que la valeur ($R_4$, $R_5$) de la résistance discrète (21, 22) est de l'ordre du dixième de la valeur ($R_3$) de la résistance intégrée (19) associée.

4. Additionneur selon l'une des revendications précédentes, caractérisé en ce qu'au moins l'une (Vosc) des tensions est engendrée par un oscillateur (14) faisant partie du circuit intégré (12).

5. Dispositif de balayage, notamment vertical, pour récepteur de télévision dans lequel un signal de correction (Vcor) est superposé à un signal en dents de scie (Vosc) caractérisé en ce qu'il comprend, pour effectuer la superposition, un additionneur selon la revendication 4, le générateur (14) de signaux en dents de scie faisant partie du circuit intégré (12).

6. Dispositif selon la revendication 5, caractérisé en ce qu'il est tel que l'énergie nécessaire pour engendrer le courant de déviation verticale est tirée des impulsions de retour de lignes, la variation désirée du courant dans le déviateur vertical (8) étant obtenue en agissant à chaque ligne sur le temps de conduction d'un interrupteur (3) en série avec le secondaire (2) d'un transformateur ligne (1), et le déviateur vertical étant en série avec un condensateur de liaision (9) et une résistance de mesure (10), et en ce que les signaux transmis au point de sommation (16) sont, en plus du signal en dents de scie et du signal de correction, la tension moyenne aux bornes du condensateur (9) de liaision et la tension aux bornes de la résistance de mesure (10), le signal résultant étant transmis à l'électrode (11) de commande de l'interrupteur (3) par l'intermédiaire d'un convertisseur tension-temps (25).

7. Dispositif selon la revendication 6, caractérisé en ce que le signal de tension aux bornes de la résistance de mesure (10) est appliqué à l'extrémité d'une résistance discrète (22) dont l'autre extrémité est reliée à un point (20) extérieur au circuit intégré auquel aboutit également la résistance discrète (21) recevant le signal de correction (Vcor).

8. Dispositif selon l'une des revendications 6 ou 7, caractérisé en ce que le point de sommation (16) est relié à une entrée d'un amplificateur différentiel (17) faisant partie du circuit intégré (12) sur l'autre entrée duquel est appliquée une tension constante (Vref), la sortie de l'amplificateur différentiel étant reliée à l'électrode de commande (11) de l'interrupteur (3) par l'intermédiaire du convertisseur tension-temps (25).

9. Dispositif selon la revendication 8, caractérisé en ce que le convertisseur (25) fait partie du circuit intégré (12).

10. Dispositif selon l'une des revendications 8 ou 9, caractérisé en ce que le générateur (18) permettant d'appliquer un signal de tension constante (Vref) sur une entrée de l'amplificateur différentiel (17) est interne au circuit intégré (12).

11. Récepteur de télévision, caractérisé en ce qu'il comporte un dispositif de balayage selon l'une des revendications 5 à 10.

## Claims

1. Adder of voltages comprising a summation point (16) whereto the first terminals of at least two resistors (15, 19, 24) of integrated type are connected, these resistors being integrated on a common substrate, characterized in that:
– the second terminal of at least one of said integrated resistors (19) is connected to the first terminal of at least one resistor (21, 22) of discrete type, the second remaining terminals of the resistors of integrated type and of discrete type receiving the voltages to be added up,
– the value of the resistor(s) of integrated type (19) whereto one (a plurality of) resistor(s) (21, 22) of discrete type is (are) connected, is large compared to the value of the resistor(s) of discrete type which is (are) associated thereto.

2. Adder according to Claim 1, characterized in that two voltages (Vcor and Vmes) are applied to the respective terminals of two discrete resistors (21, 22) having a common point (20) connected to the summation point (16) through an integrated resistor (19) of large value ($R_3$) compared to the value ($R_4$ or $R_5$) of a least one of the discrete resistors (21, 22).

3. Adder according to Claim 1 or 2, characterized in that the value ($R_4$, $R_5$) of the discrete resistor (21, 22) is of the order of a tenth of the value ($R_3$) of the associated integrated resistor (19).

4. Adder according to any of the preceding Claims, characterized in that at least one (Vosc) of the voltages is generated by an oscillator (14) which is part of the integrated circuit (12).

5. Deflection device, especially vertical deflection, for a television receiver wherein a correction signal (Vcor) is superimposed onto a saw-tooth signal (Vosc), characterized in that it comprises, for performing the superposition, an adder according to Claim 4, the saw-tooth signal generator (14) forming part of the integrated circuit (12).

6. Device according to Claim 5, characterized in that it is such that the energy required for generating the vertical deflection current is derived from the line flyback pulses, the desired variation of the current within the vertical deflector (8) being obtained by operating in each line on the conduction time of an interrupter (3) connected in series with the secondary (2) of a line transformer (1), and the vertical deflector being connected in series with a coupling capacitor (9) and a measurement resistor (10), and in that the signals transmitted to the summation point (16) are, in addition to the saw-tooth signal and to the correction signal, the mean voltage at the terminals of the coupling capacitor (9) and the voltage at the terminals of the measurement resistor (10), the resulting signal being transmitted to the control electrode (11) of the interrupter (3) through a voltage-time converter (25).

7. Device according to Claim 6, characterized in that the voltage at the terminals of the measurement resistor (10) is applied to one end of a discrete resistor (22) the other end of which is connected to a point (20) outside of the integrated circuit and where the discrete resistor (21) receiving the correction signal (Vcor) terminates.

8. Device according to Claim 6 or 7, characterized in that the summation point (16) is connected to an input of a differential amplifier (17) forming part of the integrated circuit (12) and to the other input of which a constant voltage (Vref) is applied, the output of the differential amplifier being connected to the control electrode (11) of the interrupter (3) through the voltage-time converter (25).

9. Device according to Claim 8, characterized in that the converter (25) is part of the integrated circuit (12).

10. Device according to Claim 8 or 9, characterized in that the generator (18) permitting to apply a signal of constant voltage (Vref) to one input of the differential amplifier (17) is internal to the integrated circuit (12).

11. Television receiver, characterized in that it comprises a deflection device according to any of Claims 5 to 10.

## Patentansprüche

1. Spannungsaddierer, der einen Summierpunkt (16) aufweist, an den die ersten Anschlüsse von wenigstens zwei Widerständen (15, 19, 24) vom integrierten Typ angeschlossen sind, wobei diese Widerstände auf einem gemeinsamen Substrat integriert sind, dadurch gekennzeichnet, dass:
– der zweite Anschluss wenigstens eines der genannten integrierten Widerstände (19) mit dem ersten Anschluss wenigstens eines Widerstandes (21, 22) vom diskreten Typ verbunden ist, wobei die zweiten, verbleibenden Anschlüsse der Widerstände vom integrierten Typ and vom diskreten Typ die zu addierenden Spannungen empfangen, – der Wert des (der) Widerstandes (Widerstände) vom integrierten Typ (19), mit dem (denen) ein (mehrere) Widerstand (Widerstände) (21, 22) vom diskreten Typ verbunden ist (sind), gross ist gegenüber dem Wert des (der) Widerstandes (Widerstände) vom diskreten Typ, der (die) ihm (ihnen) zugeordnet ist (sind).

2. Addierer nach Anspruch 1, dadurch gekennzeichnet, dass zwei Spannungen (Vcor und Vmes) an die jeweiligen Enden von zwei diskreten Widerständen (21, 22) angelegt sind, die einen gemeinsamen Punkt (20) aufweisen, welcher mit dem Summierpunkt (16) über einen integrierten Widerstand (19) von grossem Wert ($R_3$) gegenüber dem Wert ($R_4$ oder $R_5$) wenigstens eines der diskreten Widerstände (21, 22) verbunden ist.

3. Addierer nach einem der beiden Ansprüche 1 oder 2, dadurch gekennzeichnet, dass der Wert ($R_4$, $R_5$) des diskreten Widerstandes (21, 22) die Grössenordnung eines Zehntels des Wertes ($R_3$) des zugeordneten integrierten Widerstandes (19) beträgt.

4. Addierer nach einem der vorstehenden Ansprüche, dadurch gekennzeichnet, dass wenigstens eine (Vosc) der Spannungen durch einen Oszillator (14) erzeugt wird, der Bestandteil der integrierten Schaltung (12) ist.

5. Ablenkschaltung, insbesondere Vertikal-Ablenkschaltung, für einen Fernsehempfänger, bei welchem ein Korrektursignal (Vcor) einem Sägezahnsignal (Vosc) überlagert ist, dadurch gekennzeichnet, dass sie zur Durchführung der Überlagerung einen Addierer nach Anspruch 4 enthält, wobei der Sägezahnsignalgenerator (14) Bestandteil der integrierten Schaltung (12) ist.

6. Vorrichtung nach Anspruch 5, dadurch gekennzeichnet, dass sie derart ausgebildet ist, dass die Energie, welche zur Erzeugung des Vertikalablenkstroms erforderlich ist, aus den Zeilenrücklaufimpulsen gewonnen wird, wobei die gewünschte Variation des Stromes in der Vertikal-Ablenkeinheit (8) erhalten wird, indem in jeder Zeile auf die Dauer der Leitung eines Unterbrechers (3) eingewirkt wird, der in Reihe mit der Sekundärwicklung (2) eines Zeilentransformators (1) liegt, wobei die Vertikal-Ablenkeinheit in Reihe mit einem Verbindungskondensator (9) und einem Messwiderstand (10) liegt, und dass die zu dem Summierpunkt (16) übertragenen Signale, zusätzlich zu dem Sägezahnsignal und dem Korrektursignal, die mittlere Spannung an den Anschlüssen des Verbindungskondensators (9) und die Spannung an den Anschlüssen des Messwiderstandes (10) sind, wobei das resultierende Signal an die Steuerelektrode (11) des Unterbrechers (3) über einen Spannung/Zeit-Umsetzer (25) angelegt wird.

7. Vorrichtung nach Anspruch 6, dadurch gekennzeichnet, dass das Spannungssignal an den Anschlüssen des Messwiderstandes (10) an das Ende eines diskreten Widerstandes (22) angelegt wird, dessen anderes Ende an einen ausserhalb der integrierten Schaltung liegenden Punkt (20) angeschlossen ist, an den auch der diskrete Widerstand (21) herangeführt ist, welcher das Korrektursignal (Vcor) empfängt.

8. Vorrichtung nach einem der beiden Ansprüche 6 oder 7, dadurch gekennzeichnet, dass der Summierpunkt (16) mit einem Eingang eines Differenzverstärkers (17) verbunden ist, welcher Bestandteil der integrierten Schaltung (12) ist und an dessen anderen Eingang eine konstante Spannung (Vref) angelegt ist, während der Ausgang des Differenzverstärkers mit der Steuerelektrode (11) des Unterbrechers (3) über den Spannung/Zeit-Umsetzer (25) verbunden ist.

9. Vorrichtung nach Anspruch 8, dadurch gekennzeichnet, dass der Umsetzer (25) Bestandteil der integrierten Schaltung (12) ist.

10. Vorrichtung nach einem der beiden Ansprüche 8 oder 9, dadurch gekennzeichnet, dass der Generator (18), welcher das Anlegen eines Signals mit konstanter Spannung (Vref) an einen Eingang des Differenzverstärkers (17) ermöglicht, im Inneren der integrierten Schaltung (12) verwirklicht ist.

11. Fernsehempfänger, dadurch gekennzeichnet, dass er eine Ablenkvorrichtung nach einem der Ansprüche 5 bis 10 enthält.

0 055 148